# FASCICULE DE BREVET EUROPEEN

(11) **EP 3 826 864 B1**
(45) Date de publication et mention de la délivrance du brevet: **25.05.2022**
(21) Numéro de dépôt: 19761909.1
(22) Date de dépôt: 17.07.2019
(51) Int. Cl.: B60C 15/06

(54) **BOURRELET DE PNEUMATIQUE POUR VEHICULE LOURD DE TYPE GENIE CIVIL**
WULST FÜR EINEN REIFEN EINES HOCH- UND TIEFBAU-SCHWERLASTFAHRZEUGS
BEAD FOR A TYRE FOR A CIVIL-ENGINEERING HEAVY VEHICLE

(30) Priorité: 24.07.2018 FR 1856845
(43) Date de publication de la demande: 02.06.2021
(73) Titulaire: COMPAGNIE GENERALE DES ETABLISSEMENTS MICHELIN, 63000 Clermont-Ferrand (FR)
(72) Inventeur: ESTENNE, Vincent, 63040 CLERMONT-FERRAND Cedex 9 (FR)
(74) Mandataire: Le Cam, Stéphane Georges Elie
(86) Numéro de dépôt international: PCT/FR2019/051790
(87) Numéro de publication internationale: WO 2020/021183

(56) Documents cités:
- EP-A1- 1 911 607
- EP-A1- 2 910 391
- EP-A1- 3 299 186
- US-A- 3 406 733

## Description

La présente invention concerne un pneumatique radial destiné à équiper un véhicule lourd de type génie civil.

Bien que non limitée à ce type d'application, l'invention sera plus particulièrement décrite en référence à un pneumatique radial destiné à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est égal au minimum à 25 pouces.

Des pneumatiques pour véhicules lourds sont divulgués dans les documents EP 3299186 et EP 2910391.

Dans ce qui suit, on désigne par:
- « Plan méridien »: un plan contenant l'axe de rotation du pneumatique.
- « Plan équatorial »: le plan passant par le milieu de la surface de roulement du pneumatique et perpendiculaire à l'axe de rotation du pneumatique.
- « Direction radiale »: une direction perpendiculaire à l'axe de rotation du pneumatique.
- « Direction axiale »: une direction parallèle à l'axe de rotation du pneumatique.
- « Direction circonférentielle »: une direction perpendiculaire à un plan méridien.
- « Distance radiale »: une distance mesurée perpendiculairement à l'axe de rotation du pneumatique et à partir de l'axe de rotation du pneumatique.
- « Distance axiale »: une distance mesurée parallèlement à l'axe de rotation du pneumatique et à partir du plan équatorial.
- « Radialement » : selon une direction radiale.
- « Axialement » : selon une direction axiale.
- « Radialement intérieur, respectivement radialement extérieur »: dont la distance radiale est inférieure, respectivement supérieure.
- « Axialement intérieur, respectivement axialement extérieur»: dont la distance axiale est inférieure, respectivement supérieure.

Un pneumatique comprend deux bourrelets, assurant la liaison mécanique entre le pneumatique et la jante sur laquelle il est monté, les bourrelets étant réunis respectivement par l'intermédiaire de deux flancs à une bande de roulement, destinée à venir en contact avec le sol par l'intermédiaire d'une surface de roulement.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type génie civil comprend au moins une couche de carcasse constituée d'éléments de renforcement métalliques enrobés d'un matériau élastomérique d'enrobage, le plus souvent une couche de carcasse unique. Dans ce qui suit , l'armature de carcasse est supposée constituée par une couche de carcasse unique . Les éléments de renforcement métalliques de couche de carcasse sont sensiblement parallèles entre eux et font, avec la direction circonférentielle, un angle compris entre 85° et 95°. La couche de carcasse comprend une partie principale reliant les deux bourrelets entre eux et s'enroulant, dans chaque bourrelet, autour d'un noyau tringle. Le noyau tringle comprend un élément de renforcement circonférentiel le plus souvent métallique entouré d'au moins un matériau, de manière non exhaustive, polymérique ou textile. L'enroulement de la couche de carcasse autour du noyau tringle va de l'intérieur vers l'extérieur du pneumatique pour former un retournement de couche de carcasse, comprenant une extrémité libre. Le retournement de couche de carcasse, dans chaque bourrelet, permet l'ancrage de la couche de carcasse au noyau tringle du bourrelet.

Chaque bourrelet comprend un élément de remplissage prolongeant radialement vers l'extérieur le noyau tringle. L'élément de remplissage a, dans tout plan méridien, une section sensiblement triangulaire et est constitué d'au moins un matériau élastomérique de remplissage. L'élément de remplissage peut être constitué d'un empilage dans le sens radial d'au moins deux matériaux élastomériques de remplissage en contact suivant une surface de contact coupant tout plan méridien selon une trace méridienne. L'élément de remplissage sépare axialement la partie principale de couche de carcasse et le retournement de couche de carcasse.

Chaque bourrelet comprend également un élément de protection prolongeant radialement vers l'intérieur le flanc et axialement extérieur au retournement de couche de carcasse. L'élément de protection est également au moins en partie en contact par sa face axialement extérieure avec le rebord de la jante. L'élément de protection est constitué d'au moins un matériau élastomérique de protection.

Chaque bourrelet comprend enfin un élément de bourrage axialement intérieur au flanc et à l'élément de protection et axialement extérieur au retournement de couche de carcasse. L'élément de bourrage est constitué d'au moins un matériau élastomérique de bourrage.

Pour améliorer l'endurance du bourrelet, il est d'usage d'ajouter une couche de renforcement qui est au moins en partie en contact avec le retournement de couche de carcasse. Ladite couche de renforcement est constituée de renforts, enrobés dans un mélange élastomérique et forme, avec la direction radiale (ZZ'), un angle au plus égal à 45°.

Un matériau élastomérique, après cuisson, est caractérisé mécaniquement par des caractéristiques de contrainte-déformation en traction, déterminées par des essais de traction. Ces essais de traction sont effectués par l'homme du métier, sur une éprouvette, selon une méthode connue, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 100% d'allongement d'un mélange élastomérique, exprimé en méga pascals (MPa), la contrainte de traction mesurée pour un allongement de 100% de l'éprouvette.

Un matériau élastomérique, après cuisson, est également caractérisé mécaniquement par sa dureté. La dureté est notamment définie par la dureté Shore A déterminée conformément à la norme ASTM D 2240-86.

Au cours du roulage du véhicule, le pneumatique, monté sur sa jante, gonflé et écrasé sous la charge du véhicule, est soumis à des cycles de flexion, en particulier au niveau de ses bourrelets et de ses flancs.

Les cycles de flexion entraînent des contraintes et des déformations de cisaillement et de compression, dans les matériaux élastomériques d'enrobage et de bourrage, sur la face axialement extérieure du retournement de couche de carcasse, en raison de la flexion du bourrelet sur le rebord de jante.

Ces solliciations mécaniques du bourrelet sont à l'origine d'amorce de fissures dans l'élastomère d'enrobage de la couche de renforcement de l'armature de carcasse en face du talon du bourrelet. Ces fissures se propagent vers l'élément de protection qui est en contact avec la jante, ce qui entraine la détérioration du pneumatique.

Les inventeurs se sont donnés pour objectif d'améliorer l'endurance des bourrelets d'un pneumatique radial pour véhicule lourd de type génie civil, en bloquant la propagation des fissures initiées dans l'élastomère d'enrobage de la couche de renforcement, vers l'élément de protection en contact avec la jante.

Cet objectif a été atteint, selon l'invention, par un pneumatique pour véhicule lourd comprenant :
- deux bourrelet destinés chacun à entrer en contact avec une jante par l'intermédiaire d'une face de contact ;
- ladite face de contact, lorsque le pneumatique est monté et gonflé sur sa jante, comprenant une première portion axiale, sensiblement parallèle à une direction axiale parallèle à l'axe de rotation du pneumatique, reliée par une deuxième portion circulaire ayant un centre O, à une troisième portion radiale, parallèle à une direction radiale ;
- ledit pneumatique comprenant une armature de carcasse, reliant les deux bourrelets entre eux et comprenant au moins une couche de carcasse constituée de renforts enrobés dans un mélange élastomérique d'enrobage M1 ayant un module d'élasticité en extension à 100% d'allongement E1 ;
- ladite couche de carcasse comprenant une partie principale, s'enroulant dans chaque bourrelet, de l'intérieur vers l'extérieur du pneumatique, autour d'un noyau tringle inscrit dans un cercle ayant un centre G et un rayon R, pour former un retournement ;
- une couche de renforcement de bourrelet, ayant une épaisseur Er et constituée de renforts, enrobés dans un mélange élastomérique d'enrobage M2 ayant un module d'élasticité en extension à 100% d'allongement E2 et formant, avec la direction radiale, un angle A au plus égal à 45°,
- ladite couche de renforcement de bourrelet étant au moins en partie en contact avec l'armature de carcasse et s'étendant à l'extérieur de l'armature de carcasse, à partir d'une première extrémité, radialement extérieure à une droite axiale passant par le centre G du cercle circonscrit au noyau tringle, jusqu'à une deuxième extrémité, axialement intérieure à une droite radiale passant par le centre G du noyau tringle,
- chaque bourrelet comprend une gomme coussin, constituée d'un mélange élastomérique M3 ayant un module d'élasticité en extension à 100% d'allongement E3, ladite gomme coussin étant intercalée entre l'armature de carcasse et la couche de renforcement de bourrelet, et s'étendant sur un secteur angulaire défini par l'angle formé par les droites passant respectivement par le centre G du noyau tringle et l'extrémité radialement extérieure de la gomme coussin et par le centre du noyau tringle et l'extrémité radialement intérieure de la gomme coussin ;
- ladite gomme coussin ayant une épaisseur maximale Emax, au moins égale à l'épaisseur Er de la couche de renforcement de bourrelet, mesurée sur la droite passant par le centre O de la deuxième portion circulaire de la face de contact et perpendiculaire à l'armature de carcasse ;
- le module d'élasticité en extension à 100% d'allongement E3 du mélange élastomérique M3 constituant la gomme coussin est inférieure au module d'élasticité en extension à 100% d'allongement E1 du mélange élastomérique d'enrobage M1 de la couche de carcasse.

Selon l'invention, il est avantageux d'avoir une gomme coussin intercalée entre la couche de renforcement et la retournement de couche de carcasse. Le bourrelet est soumis à des cycles d'extention compression lors de l'utilisation du pneumatique gonflé, monté sur sa jante, écrasé par la charge du véhicule et en rotation autour de son axe. L'ajout de la gomme coussin écarte l'élastomère d'enrobage de la couche de renforcement de la zone des plus forts cisaillements.

D'après l'invention, la gomme coussin a une épaisseur maximale Emax, au moins égale à l'épaisseur Er de la couche de renforcement de bourrelet, mesurée sur la droite passant par le centre O de la deuxième portion circulaire de la face de contact avec la jante et perpendiculaire à l'armature de carcasse.

En l'absence de gomme coussin, la fissure est amorcée dans la gomme d'enrobage de la couche de renforcement. Les inventeurs ont établi que pour un fonctionnement optimal de l'invention la gomme coussin doit avoir une épaisseur au moins égale à celle de la couche de renforcement qui est la somme des épaisseurs de la gomme d'enrobage, au dos des renforts, et du diamètre des renforts constituant la couche de renforcement.

Toujours selon l'invention, le module d'élasticité en extension à 100% d'allongement E3 du mélange élastomérique M3 constituant la gomme coussin est inférieur au module d'élasticité en extension à 100% d'allongement E1 du mélange élastomérique d'enrobage M1 de la couche de carcasse.

La gomme coussin est en contact par sa surface axialement intérieure avec le mélange élastomérique d'enrobage de la couche de carcasse. La surface axialement extérieure de la gomme coussin est en contact avec le mélange élastomérique d'enrobage de la couche de renforcement. L'objectif est de concentrer et de contenir dans cette zone les déformations maximales dans la gomme coussin. Une condition suffisante pour faire fonctionner l'invention est d'avoir une gomme coussin plus molle, c'est-à-dire avec un module d'élaticité en extension à 100 % de déformation plus faible que celui du mélange élastomérique d'enrobage de la couche de carcasse.

Avantageusement, le secteur angulaire de la gomme coussin est supérieur ou égal à 45°, et inférieur ou égal à 90°.

Le positionnement angulaire de la gomme coussin doit être défini précisément pour garantir l'éfficacité de la gomme coussin. Il est défini en position relative par rapport au noyau tringle dans la mesure où le diamètre du noyau tringle est le paramètre déterminant pour la taille du bourrelet. En effet pour un pneumatique d'un diamètre au seat de 25 pouces, le diamètre du noyau tringle est d'environ 37 mm, alors que pour un pneumatique de diamètre au seat de 63 pouces, le diamètre du noyau tringle est de 84 mm.

Sur une dimension pneumatique de diamètre au seat de 25 pouces, le secteur angulaire de la gomme coussin est égal à 60°, alors que sur une dimension de diamètre au seat de 63 pouces, le secteur angulaire peut atteindre 80°.

Les inventeurs ont établi que la plage de variation du secteur angulaire de la gomme coussin variant entre 45° à 90° pour un bon fonctionnement de l'invention.

Encore avantageusement, l'extrémité radialement intérieure de la gomme coussin est positionnée, par rapport à la droite radiale passant par le centre G de la tringle, à une distance axiale supérieure ou égale à 10 mm.

Ainsi définie, la gomme coussin dans sa portion radialement intérieure ne se retrouve pas dans la zone de serrage de la tringle sur la jante, et donc n'affecte pas les pressions de contact du montage du bourrelet sur la jante.

Dans un mode préférentiel de réalisation de l'invention, le module d'élasticité en extension à 100% d'allongement E3 du mélange élastomérique M3 constituant la gomme coussin est au plus égal à 60% du module d'élasticité en extension à 100% d'allongement E1 du mélange élastomérique d'enrobage M1 de la couche de carcasse.

Un écart de rigidité significatif entre le mélange élastomérique de la gomme coussin et le mélange élastomérique d'enrobage de la couche de carcasse est recherché pour un bon fonctionnement de l'invention. Un exemple de valeurs de rigidités est de 1.6 MPa pour le module d'élasticité en extension E3, et 2.6 MPa pour le module d'élasticité en extension E1.

Dans un autre mode préférentiel de réalisation de l'invention, le module d'élasticité en extension à 100% d'allongement E3 du mélange élastomérique M3 constituant la gomme coussin est inférieur ou égal au module d'élasticité en extension à 100% d'allongement E2 du mélange élastomérique d'enrobage M2 de la couche de renforcement de bourrelet.

Dans la zone d'initiation de fissure, les mélanges concernés sont les mélanges élastomériques d'enrobage de la couche de carcasse, de la couche de renforcement du bourrelet, et de la gomme coussin. Les inventeurs ont établi la relation que le module d'élasticité en extension à 100 % de déformation de la gomme coussin doit être inférieur à la fois aux modules d'élasticité en extension à 100% de déformation du mélange élastomérique d'enrobage de la couche de carcasse et du mélange élastomérique d'enrobage de la couche de renforcement du bourrelet.

Il est avantageux que le module d'élasticité en extension à 100% d'allongement E3 du mélange élastomérique M3 constitutif de la couche coussin est égal à 1.6 MPa.

Il est également avantageux que le module d'élasticité en extension à 100% d'allongement E1 du mélange élastomérique d'enrobage M1 de la couche de carcasse est égal à 2.6 MPa.

Le mélange élastomérique d'enrobage de la couche de carcasse doit avoir un module élastique en extension à 100% de déformation bien supérieur à celui de la gomme coussin. Un couple de valeurs à 1.6 MPa pour la gomme coussin et à 2.6 MPa pour la couche de carcasse sont suffisants pour bloquer la propagation des fissures initiées dans le mélange élastomérique d'enrobage de la couche de renforcement.

Il est également avantageux que les renforts de la couche de renforcement du bourrelet forment, avec la direction radiale du pneumatique, un angle au moins égal à 22° et au plus égal à 28°.

Généralement, l'angle des renforts de la couche de renforcement du bourrelet est égal à 45°. Mais les inventeurs ont observé qu'en refermant l'angle avec une valeur comprise entre 22° et 28°, les rigidités circonférentielles du bourrelet augmentent, ce qui améliore le fonctionnement de l'invention.

Dans un mode de réalisation de l'invention, les renforts de la couche de renforcement de bourrelet forment, avec la direction radiale du pneumatique, un angle variable au moins égal à 25° sur une partie de la couche et au plus égal à 45° sur la partie restante.

Selon l'invention, l'épaisseur Er de la couche de renforcement de bourrelet est inférieure ou égale à 2.5 mm.

Afin de limiter la temérature dans le bourrelet, les inventeurs ont établi que l'épaisseur maximale de la couche de renforcement de bourrelet devrait rester inférieure à 2.5 mm. Par ailleurs, l'insertion de la gomme coussin ne doit pas modifier excessivement le profil méridien de l'armature de carcasse. Ainsi, en restreignant l'épaisseur de la couche de renforcement, on peut alors insérer sur une grande dimension de pneumatique telle que le 59/60R63, une gomme de coussin d'une épaisseur maximale jusqu'à 8 mm, alors que sur une petite dimension telle que le 18.00 R25, l'épaisseur maximale de la gomme coussin est de 6 mm.

Les caractéristiques de l'invention seront mieux comprises à l'aide de la description des figures annexées 1 , 2 et 3 :
- la figure 1 représente une vue en coupe dans un plan méridien du bourrelet d'un pneumatique pour véhicule lourd de type génie civil de l'état de la technique.
- la figure 2 représente une vue en coupe dans un plan méridien du bourrelet d'un pneumatique pour véhicule lourd de type génie civil, selon l'invention.
- la figure 3 représente une vue en coupe dans un plan méridien du bourrelet d'un pneumatique pour véhicule lourd de type génie civil, selon l'invention, définissant le positionnement angulaire de la gomme coussin.

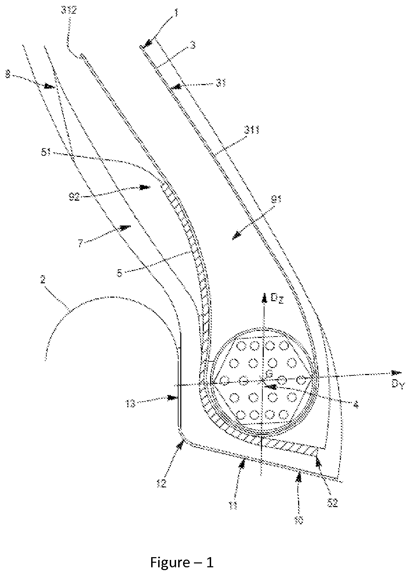

Les figures 1,2 et 3 ne sont pas représentées à l'échelle pour en faciliter la compréhension.

Sur la figure 1, est représenté un bourrelet 1 de pneumatique pour véhicule lourd de type génie civil de l'état de la technique, monté sur une jante 2, comprenant :
- une armature de carcasse 3, comprenant une seule couche de carcasse 31 constituée d'éléments de renforcement métalliques enrobés par un matériau élastomérique d'enrobage, avec une partie principale de couche de carcasse 311 s'enroulant, de l'intérieur vers l'extérieur du pneumatique, autour d'un noyau tringle 4 pour former un retournement de couche de carcasse 312 ;
- un élément de remplissage 91 prolongeant radialement vers l'extérieur le noyau tringle 4, ayant, dans tout plan méridien, une section sensiblement triangulaire et étant constitué d'un matériau élastomérique de remplissage ;
- un élément de protection 7 prolongeant axialcmcnt vers l'intérieur un flanc 8 et constitué d'un matériau élatomérique de protection,
- un élément de bourrage 92 axialement intérieur à l'élément de protection 7 et au flanc 8 et axialement extérieur au retournement d'armature de carcasse 312, et constitué d'un matériau élastomérique de bourrage.
- une couche de renforcement de bourrelet 5, s'étendant entre une extrémité radialement extérieure 51 et une extrémité radialement intérieure 52, axialement à l'extérieur et en contact avec le retournement de couche de carcasse 312.

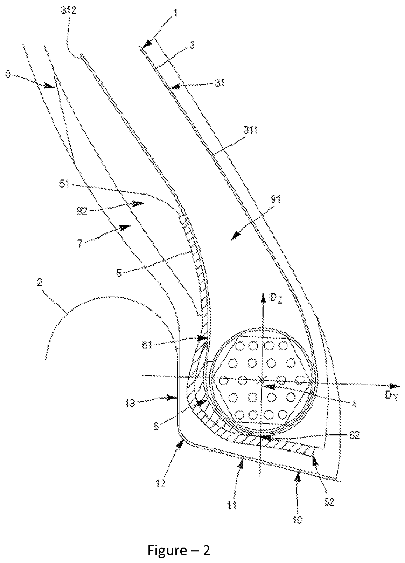

La figure 2 présente un bourrelet de pneumatique pour véhicule lourd de type génie civil, selon l'invention, comprenant :
- une armature de carcasse 3, comprenant une seule couche de carcasse 31 constituée d'éléments de renforcement métalliques enrobés par un matériau élastomérique d'enrobage, avec une partie principale de couche de carcasse 311 s'enroulant, de l'intérieur vers l'extérieur du pneumatique, autour d'un noyau tringle 4 pour former un retournement de couche de carcasse 312 ;
- un élément de remplissage 91 prolongeant radialement vers l'extérieur le noyau tringle 4, ayant, dans tout plan méridien, une section sensiblement triangulaire et étant constitué d'un matériau élastomérique de remplissage ;
- un élément de protection 7 prolongeant axialement vers l'intérieur un flanc 8 et constitué d'un matériau élatomérique de protection,
- un élément de bourrage 92 axialement intérieur à l'élément de protection 7 et au flanc 8 et axialement extérieur au retournement d'armature de carcasse 312, et constitué d'un matériau élastomérique de bourrage.
- une couche de renforcement de bourrelet 5, s'étendant entre une extrémité radialement extérieure 51 et une extrémité radialement intérieure 52, axialement à l'extérieur et en contact avec le retournement de couche de carcasse 312.
- Une gomme coussin 6 en contact, par une face axialement intérieure, avec le matériau élastomérique d'enrobage de la face axialement extérieure du retournement de couche de carcasse 312 et, par une face axialement extérieure, avec le matériau élastomérique d'enrobage de la couche de renforcement de bourrelet 5 .

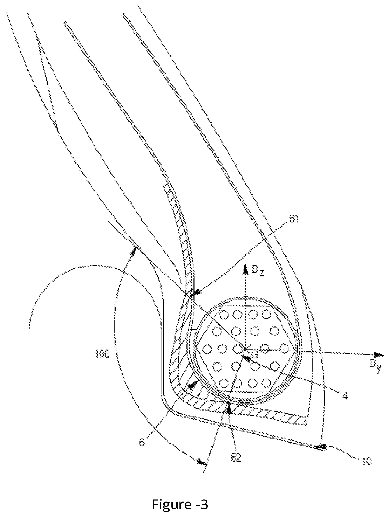

La figure 3 représente un zoom sur le bourrelet pour mettre en évidence le positionnement de la gomme coussin:
- Les extrémités radialement extérieure et radialement intérieure respectivement 61 et 62 qui délimitent la gomme coussin 6 ;
- Le secteur angulaire 100 de la gomme coussin 6, défini par l'angle formé par les droites passant respectivement par le centre G du noyau tringle 4 et l'extrémité radialement extérieure 61 de la gomme coussin 6 et par le centre G du noyau tringle 4 et l'extrémité radialement intérieure 62 de la gomme coussin 6;
- Le noyau tringle 4 de centre G, de forme hexagonale ;

L'invention a été plus particulièrement étudiée dans le cas d'un pneumatique pour véhicule lourd de type dumper de dimension 59/80R63, conçu pour porter une charge de 104 tonnes à une pression d'usage de 6.8 bars.

La gomme coussin est posée sur la face axialement extérieure du retournement de couche de carcasse avec une longueur curviligne de 60 mm entre une extrémité radialement extérieure 61 et une extrémité radialement intérieure 62. Son secteur anglaire mesurée par rapport au centre G de la tringle entre les segments joignant ce centre G et d'une part l'extrémité radialement extérieur de la gomme coussin et d'autre part son extrémité radialement intérieur est de 80°. Dans ce mode de réalisation de l'invention, l'épaisseur maximale de la gomme coussin est égale 8 mm, mesurée sur l'axe orthogonal à l'armature de caracasse qui passe par le centre du congé de raccord 12 des parties axiale 13 et radiale 11 du rebord de jante.

L'armature de carcasse est constituée d'une couche de carcasse formée de renforts métalliques, enrobés dans un mélange élastomérique. Les renforts métalliques sont des câbles constitués de 189 fils de 23 centième de millimètres de diamètre chacun.

Le mélange élastomérique d'enrobage de la couche de carcasse est obtenu d'après la composition suivante, exprimée en partie pour cent d'élastomère (pce) :

**Tableau N°1**

| Composition | Elastomère NR (Natural Rubber) | Noir de carbone N326 | Antioxydant | ZnO | Acide stéarique | Soufre | DCBS | Résine OPF Epoxy | Sel de cobalt | CTP |
|---|---|---|---|---|---|---|---|---|---|---|
| Mélange élastomérique d'enrobage de la carcasse | 100 | 47 | 1.5 | 7.5 | 0.9 | 5.63 | 0.8 | 0.5 | 1.5 | 0.15 |

Avec la composition ci-dessus, le mélange élastomérique d'enrobage de la couche de carcasse a un module d'élasticité en extension mesuré à 100% de déformation d'une valeur de 2.6 MPa, et à 10% de déformation le module d'élasticité en extension a une valeur de 5.2 MPa.

Dans un mode de réalisation simplifiée de l'invention, le mélange élastomérique d'enrobage de la couche de renforcement est constitué du même mélange élastomérique d'enrobage que celui de la couche de carcasse.

La gomme coussin a un module d'élasticité en extension mesuré à 100% de déformation d'une valeur de 1.6 MPa, et à 10% de déformation le module d'élasticité en extension a une valeur de 3.2 MPa.

La gomme coussin est significativement plus molle que le mélange élastomérique d'enrobage de la couche de carcasse : à 100% de déformation le module d'élasticité en extension de la gomme cousin représente 60% de celui de la couche de renforcement. Ce décalage du module d'élasticité en extension se retrouve à peu près pour tous les niveaux de déformation.

Le pneumatique 59/80R63 a été conçu conformément à l'invention, telle que représentée sur la figure 2.

Des simulations de calculs par éléments finis ont été réalisées respectivement sur un pneumatique de référence, tel que représenté sur la figure 1, et sur un pneumatique selon l'invention, tel que représenté sur la figure 2.

Les inventeurs ont établi que la densité d'énergie de déformation est la grandeur physique pertinente pour analyser la propagation des fissures. Ils ont considéré l'évolution crête à crête de la densité d'énergie de déformation sur un tour de roue, calculée dans les mélanges élastomériques d'enrobage des couches de carcasse et de renforcement du bourrelet pour les pneumatiques de référence et de l'invention. Pour le pneumatique de l'invention, la densité d'énergie de déformation a également été calculée dans la gomme coussin.

Les inventeurs ont également réalisé des calculs de sensibilité paramétrique, par rapport à l'angle des renforts de la couche de renforcement du bourrelet, formé avec la direction ZZ', dans l'optique de déterminer l'angle optimal pour maximiser les rigidités circonférentielles du bourrelet.

Les résultats de calculs sont comparés entre les pneumatiques de référence et de l'invention :

**Tableau N°2**

| | Densité d'énergie de déformation calculée dans la zone de fissuration | | |
|---|---|---|---|
| Zone | Mélange d'enrobage de la couche de renforcement | Mélange d'enrobage de la couche de carcasse | Taux de participation de la gomme coussin |
| Pneumatique de Référence | 100 | 100 | NA |
| Pneumatique de l'invention doté d'une couche de renforcement avec des renforts à 25° | 110 | 109 | 82 |
| Pneumatique de l'invention doté d'une couche de renforcement avec des renforts à angles variables 25°/45° | 77 | 121 | 66 |

Sur le pneu de référence (base 100), la fissure est initiée dans le mélange élastomérique d'enrobage de la couche de renforcement, puis se propage en direction de la gomme de protection en contact avec la jante au niveau du seat.

Sur le pneumatique de l'invention, à la quatrième ligne du tableau n°2, la variation crête à crête de la densité d'énergie de déformation est diminuée d'environ 10% dans le mélange d'enrobage de la couche de reforcement. Le gain est d'environ 9% dans l'élastomère d'enrobage de la couche de carcasse. La gomme coussin participe à hauteur de 82% à cette amélioration qui est suffisante pour empêcher la propagation de la fissure.

Dans une réalisation de l'invention avec une couche de renforcement dotée de renforts à angles variables, en l'occurrence 25° et 45°, le gain est nettement perceptible dans l'élastomère d'enrobage de la couche de carcasse (121%), mais les variations crête à crêtre de la densité d'énergie de déformation continuent à être élevées dans l'élastomère d'enrobage de la couche de renforcement. Ici aussi, l'invention fonctionne, la fissure ne se propage pas.

Les résultats de l'optimisation de l'angle de la couche de renforcement ont convergé vers une valeur d'angle de 25°.

L'invention ne doit pas être interprétée comme étant limitée à l'exemple illustré sur la figure 2 mais peut être étendue à d'autres variantes de réalisation, telles que, par exemple et de manière non exhaustive, relatives au nombre de matériaux élastomériques de transition compris entre le matériau élastomérique d'enrobage et le matériau élastomérique de bourrage.

## Revendications

1. Pneumatique pour véhicule lourd comprenant :
- deux bourrelets (1) destinés chacun à entrer en contact avec une jante (2) par l'intermédiaire d'une face de contact (10),
- ladite face de contact (10) comprenant une première portion axiale (11), sensiblement parallèle à une direction axiale parallèle à l'axe de rotation du pneumatique, reliée par une deuxième portion circulaire (12) ayant un centre O, à une troisième portion radiale (13), parallèle à une direction radiale,
- ledit pneumatique comprenant une armature de carcasse (3), reliant les deux bourrelets (1) entre eux et comprenant au moins une couche de carcasse (31) constituée de renforts enrobés dans un mélange élastomérique d'enrobage M1 ayant un module d'élasticité en extension à 100% d'allongement E1,
- ladite couche de carcasse (31) comprenant une partie principale (311), s'enroulant dans chaque bourrelet (1), de l'intérieur vers l'extérieur du pneumatique, autour d'un noyau tringle (4) inscrit dans un cercle ayant un centre G et un rayon R, pour former un retournement (312),
- une couche de renforcement de bourrelet (5), ayant une épaisseur Er et constituée de renforts, enrobés dans un mélange élastomérique d'enrobage M2 ayant un module d'élasticité en extension à 100% d'allongement E2 et formant, avec la direction radiale, un angle A au plus égal à 45°,
- ladite couche de renforcement de bourrelet (5) étant au moins en partie en contact avec l'armature de carcasse (3) et s'étendant à l'extérieur de l'armature de carcasse (3), à partir d'une première extrémité (51), radialement extérieure à une droite axiale (DY) passant par le centre G du cercle circonscrit au noyau tringle (4), jusqu'à une deuxième extrémité (52), axialement intérieure à une droite radiale (DZ) passant par le centre G du noyau tringle (4),
**caractérisé en ce que** chaque bourrelet (1) comprend une gomme coussin (6), constituée d'un mélange élastomérique M3 ayant un module d'élasticité en extension à 100% d'allongement E3, ladite gomme coussin étant intercalée entre l'armature de carcasse (3) et la couche de renforcement de bourrelet (5), ladite gomme coussin étant posée sur la face axialement extérieure du retournement (312) de couche de carcasse (31), et s'étendant sur un secteur angulaire défini par l'angle formé par les droites passant respectivement par le centre G du noyau tringle (4) et l'extrémité radialement extérieure de la gomme coussin (61) et par le centre G du noyau tringle et l'extrémité radialement intérieure de la gomme coussin (62);
**en ce que** ladite gomme coussin (6) a une épaisseur maximale Emax, mesurée sur la droite passant par le centre O de la deuxième portion circulaire (12) de la face de contact (10) et perpendiculaire à l'armature de carcasse (3), au moins égale à l'épaisseur Er de la couche de renforcement de bourrelet (5),
et **en ce que** le module d'élasticité à 100% d'allongement E3 du mélange élastomérique M3 constituant la gomme coussin (6) est inférieur au module d'élasticité à 100% d'allongement E1 du mélange élastomérique d'enrobage M1 de la couche de carcasse (31).

2. Pneumatique selon la revendication 1, **dans** lequel le secteur angulaire de la gomme coussin (100) est supérieur ou égal à 45°, et inférieur ou égal à 90°.

3. Pneumatique selon l'une quelconque des revendications 1 à 2, **dans lequel** l'extrémité radialement intérieure de la gomme coussin (62) est positionnée, par rapport à la droite radiale passant par le centre G de la tringle, à une distance axiale supérieure ou égale à 10 mm.

4. Pneumatique selon l'une quelconque des revendications 1 à 3, **dans** lequel le module d'élasticité en extension à 100% d'allongement E3 du mélange élastomérique M3 constituant la gomme coussin (6) est au plus égal à 60% du module d'élasticité à 100% d'allongement E1 du mélange élastomérique d'enrobage M1 de la couche de carcasse (31).

5. Pneumatique selon l'une quelconque des revendications 1 à 4, **dans** lequel le module d'élasticité en extension à 100% d'allongement E3 du mélange élastomérique M3 constituant la gomme coussin (6) est inférieur ou égal au module d'élasticité en extension à 100% d'allongement E2 du mélange élastomérique d'enrobage M2 de la couche de renforcement de bourrelet (5).

6. Pneumatique selon l'une quelconque des revendications 1 à 5, **dans** lequel le module d'élasticité en extension à 100% d'allongement E3 du mélange élastomérique M3 constitutif de la gomme coussin (6) est égal à 1.6 MPa.

7. Pneumatique selon l'une quelconque des revendications 1 à 6 **dans** lequel le module d'élasticité en extension à 100% d'allongement E1 du mélange élastomérique d'enrobage M1 de la couche de carcasse (31) est égal à 2.6 MPa.

8. Pneumatique selon l'une quelconque des revendications 1 à 7, **dans lequel** les renforts de la couche de renforcement de bourrelet (5) forment, avec la direction radiale (ZZ') du pneumatique, un angle A au moins égal à 22° et au plus égal à 28°.

9. Pneumatique selon l'une quelconque des revendications 1 à 8, **dans lequel** les renforts de la couche de renforcement de bourrelet (5) forment, avec la direction radiale (ZZ') du pneumatique, un angle variable au moins égal à 25° sur une partie de la couche et au plus égal à 45° sur la partie restante.

10. Pneumatique selon l'une quelconque des revendications 1 à 10, **dans lequel** l'épaisseur Er de la couche de renforcement de bourrelet (5) est inférieure ou égale à 2.5 mm.

## Patentansprüche

1. Reifen für ein Schwerlastfahrzeug, welcher umfasst:
- zwei Wülste (1), die dazu bestimmt sind, über eine Kontaktfläche (10) mit einer Felge (2) in Kontakt zu kommen,
- wobei die Kontaktfläche (10) einen axialen ersten Abschnitt (11), der im Wesentlichen parallel zu einer zur Drehachse des Reifens parallelen axialen Richtung ist, umfasst, der über einen kreisförmigen zweiten Abschnitt (12), der einen Mittelpunkt O aufweist, mit einem radialen dritten Abschnitt (13) verbunden ist, der zu einer radialen Richtung parallel ist,
- wobei der Reifen eine Karkassenbewehrung (3) umfasst, welche die zwei Wülste miteinander verbindet und mindestens eine Karkassenlage (31) umfasst, die aus Festigkeitsträgern besteht, die in eine Einbettungselastomermischung M1 eingebettet sind, die einen Dehnungselastizitätsmodul bei 100 % Dehnung E1 aufweist,
- wobei die Karkassenlage (31) einen Hauptteil (311) umfasst, der in jedem Wulst (1) vom Inneren zur Außenseite des Reifens hin um einen Wulstkern (4) herumgelegt ist, der in einen Kreis mit einem Mittelpunkt G und einem Radius R einbeschrieben ist, um einen umgeschlagenen Teil (312) zu bilden,
- eine Wulstverstärkungsschicht (5), die eine Dicke Er aufweist und aus Festigkeitsträgern besteht, die in eine Einbettungselastomermischung M2 eingebettet sind, die einen Dehnungselastizitätsmodul bei 100 % Dehnung E2 aufweist, und die mit der radialen Richtung einen Winkel A bilden, der höchstens 45° beträgt,
- wobei sich die Wulstverstärkungsschicht (5) wenigstens teilweise mit der Karkassenbewehrung (3) in Kontakt befindet und sich außerhalb der Karkassenbewehrung (3) von einem ersten Ende (51), das radial außerhalb einer durch den Mittelpunkt G des dem Wulstkern (4) umbeschriebenen Kreises verlaufenden axialen Geraden (DY) liegt, bis zu einem zweiten Ende (52) erstreckt, das axial innerhalb einer durch den Mittelpunkt G des Wulstkerns (4) verlaufenden radialen Geraden (DZ) liegt,
**dadurch gekennzeichnet, dass** jeder Wulst (1) einen Kissengummi (6) umfasst, der aus einer Einbettungselastomermischung M3 besteht, die einen Dehnungselastizitätsmodul bei 100 % Dehnung E3 aufweist, wobei der Kissengummi zwischen der Karkassenbewehrung (3) und der Wulstverstärkungsschicht (5) angeordnet ist, wobei der Kissengummi auf die axial äußere Seite des umgeschlagenen Teils (312) der Karkassenlage (31) aufgelegt ist und sich über einen Winkelsektor erstreckt, der durch den Winkel definiert ist, der von den Geraden gebildet wird, die durch den Mittelpunkt G des Wulstkerns (4) und das radial äußere Ende (61) des Kissengummis bzw. durch den Mittelpunkt G des Wulstkerns und das radial innere Ende (62) des Kissengummis verlaufen;
**dadurch, dass** der Kissengummi (6) eine maximale Dicke Emax aufweist, gemessen auf der durch den Mittelpunkt O des kreisförmigen zweiten Abschnitts (12) der Kontaktfläche (10) verlaufenden und zur Karkassenbewehrung (3) senkrechten Geraden, die mindestens gleich der Dicke Er der Wulstverstärkungsschicht (5) ist,
**und dadurch, dass** der Elastizitätsmodul bei 100 % Dehnung E3 der Elastomermischung M3, aus welcher der Kissengummi (6) besteht, kleiner als der Elastizitätsmodul bei 100 % Dehnung E1 der Einbettungselastomermischung M1 der Karkassenlage (31) ist.

2. Reifen nach Anspruch 1, **wobei** der Winkelsektor (100) des Kissengummis größer oder gleich 45° und kleiner oder gleich 90° ist.

3. Reifen nach einem der Ansprüche 1 bis 2, **wobei** das radial innere Ende (62) des Kissengummis in Bezug auf die radiale Gerade, die durch den Mittelpunkt G des Wulstkerns verläuft, in einem axialen Abstand angeordnet ist, der größer oder gleich 10 mm ist.

4. Reifen nach einem der Ansprüche 1 bis 3, **wobei** der Dehnungselastizitätsmodul bei 100 % Dehnung E3 der Elastomermischung M3, aus welcher der Kissengummi (6) besteht, höchstens 60 % des Elastizitätsmoduls bei 100 % Dehnung E1 der Einbettungselastomermischung M1 der Karkassenlage (31) beträgt.

5. Reifen nach einem der Ansprüche 1 bis 4, **wobei** der Dehnungselastizitätsmodul bei 100 % Dehnung E3 der Elastomermischung M3, aus welcher der Kissengummi (6) besteht, kleiner oder gleich dem Dehnungselastizitätsmodul bei 100 % Dehnung E2 der Einbettungselastomermischung M2 der Wulstverstärkungsschicht (5) ist.

6. Reifen nach einem der Ansprüche 1 bis 5, **wobei** der Dehnungselastizitätsmodul bei 100 % Dehnung E3 der Elastomermischung M3, aus welcher der Kissengummi (6) besteht, 1,6 MPa beträgt.

7. Reifen nach einem der Ansprüche 1 bis 6, **wobei** der Dehnungselastizitätsmodul bei 100 % Dehnung E1 der Einbettungselastomermischung M1 der Karkassenlage (31) 2,6 MPa beträgt.

8. Reifen nach einem der Ansprüche 1 bis 7, **wobei** die Festigkeitsträger der Wulstverstärkungsschicht (5) mit der radialen Richtung (ZZ') des Reifens einen Winkel A bilden, der mindestens 22° und höchstens 28° beträgt.

9. Reifen nach einem der Ansprüche 1 bis 8, **wobei** die Festigkeitsträger der Wulstverstärkungsschicht (5) mit der radialen Richtung (ZZ') des Reifens einen variablen Winkel bilden, der mindestens 25° in einem Teil der Schicht und höchstens 45° im restlichen Teil beträgt.

10. Reifen nach einem der Ansprüche 1 bis 9, **wobei** die Dicke Er der Wulstverstärkungsschicht (5) kleiner oder gleich 2,5 mm ist.

## Claims

1. Tyre for a heavy vehicle, comprising:
- two beads (1) each intended to come into contact with a rim (2) by way of a contact face (10),
- said contact face (10) comprising a first axial portion (11), substantially parallel to an axial direction parallel to the axis of rotation of the tyre, connected by a second circular portion (12), having a centre O, to a third radial portion (13), parallel to a radial direction,
- said tyre comprising a carcass reinforcement (3) connecting the two beads (1) to one another and comprising at least one carcass layer (31) made up of reinforcers coated in an elastomeric coating compound M1 having an elastic modulus in extension at 100% elongation E1,
- said carcass layer (31) comprising a main part (311) wrapping in each bead (1), from the inside to the outside of the tyre, around a bead wire core (4) inscribed in a circle having a centre G and a radius R, to form a turn-up (312),
- a bead reinforcing layer (5) having a thickness Er and made up of reinforcers coated in an elastomeric coating compound M2 having an elastic modulus in extension at 100% elongation E2 and forming, with the radial direction, an angle A at most equal to 45°,
- said bead reinforcing layer (5) being at least partially in contact with the carcass reinforcement (3) and extending on the outside of the carcass reinforcement (3) from a first end (51) radially on the outside of an axial straight line (DY) passing through the centre G of the circle circumscribed on the bead wire core (4) as far as a second end (52) axially on the inside of a radial straight line (DZ) passing through the centre G of the bead wire core (4),
**characterized in that** each bead (1) comprises a cushion rubber (6) made up of an elastomeric compound M3 having an elastic modulus in extension at 100% elongation E3, said cushion rubber being interposed between the carcass reinforcement (3) and the bead reinforcing layer (5), said cushion rubber being placed on the axially outer face of the upturn (312), and extending over an angular sector defined by the angle formed by the straight lines passing respectively through the centre G of the bead wire core (4) and the radially outer end (61) of the cushion rubber and through the centre G of the bead wire core and the radially inner end (62) of the cushion rubber;
**in that** said cushion rubber (6) has a maximum thickness Emax, measured on the straight line passing through the centre O of the second circular portion (12) of the contact face (10) and perpendicular to the carcass reinforcement (3), at least equal to the thickness Er of the bead reinforcing layer (5);
**and in that** the elastic modulus at 100% elongation E3 of the elastomeric compound M3 making up the cushion rubber (6) is less than the elastic modulus at 100% elongation E1 of the elastomeric coating compound M1 of the carcass layer (31).

2. Tyre according to Claim 1, **in which** the angular sector (100) of the cushion rubber is greater than or equal to 45° and less than or equal to 90°.

3. Tyre according to either one of Claims 1 and 2, **in which** the radially inner end (62) of the cushion rubber is positioned, with respect to the radial straight line passing through the centre G of the bead wire, at an axial distance greater than or equal to 10 mm.

4. Tyre according to any one of Claims 1 to 3, **in which** the elastic modulus in extension at 100% elongation E3 of the elastomeric compound M3 making up the cushion rubber (6) is at most equal to 60% of the elastic modulus at 100% elongation E1 of the elastomeric coating compound M1 of the carcass layer (31).

5. Tyre according to any one of Claims 1 to 4, **in which** the elastic modulus in extension at 100% elongation E3 of the elastomeric compound M3 making up the cushion rubber (6) is less than or equal to the elastic modulus in extension at 100% elongation E2 of the elastomeric coating compound M2 of the bead reinforcing layer (5).

6. Tyre according to any one of Claims 1 to 5, **in which** the elastic modulus in extension at 100% elongation E3 of the elastomeric compound M3 making up the cushion rubber (6) is equal to 1.6 MPa.

7. Tyre according to any one of Claims 1 to 6, **in which** the elastic modulus in extension at 100% elongation E1 of the elastomeric coating compound M1 of the carcass layer (31) is equal to 2.6 MPa.

8. Tyre according to any one of Claims 1 to 7, **in which** the reinforcers of the bead reinforcing layer (5) form, with the radial direction (ZZ') of the tyre, an angle A at least equal to 22° and at most equal to 28°.

9. Tyre according to any one of Claims 1 to 8, **in which** the reinforcers of the bead reinforcing layer (5) form, with the radial direction (ZZ') of the tyre, a variable angle at least equal to 25° on one part of the layer and at most equal to 45° on the remaining part.

10. Tyre according to any one of Claims 1 to 9, **in which** the thickness Er of the bead reinforcing layer (5) is less than or equal to 2.5 mm.
